# EUROPEAN PATENT APPLICATION

(11) **EP 4 166 440 A1**
(43) Date of publication of application: **19.04.2023**
(21) Application number: 21846389.1
(22) Date of filing: 20.07.2021
(51) Int. Cl.: B63B 1/32, B63B 1/06, B63B 1/08, B63H 5/08

(54) **DOUBLE-HEADED BOAT**

(30) Priority: 22.07.2020 JP 2020125119
(71) Applicant: Mitsubishi Shipbuilding Co., Ltd., Yokohama-shi Kanagawa 220-8401 (JP)
(72) Inventor: TAMURA, Hiroshi, Yokohama-shi, Kanagawa 220-8401 (JP); MINO, Masahiko, Yokohama-shi, Kanagawa 220-8401 (JP); OHSHIRO, Takaaki, Yokohama-shi, Kanagawa 220-8401 (JP)
(74) Representative: Studio Torta S.p.A.
(86) International application number: PCT/JP2021/027069
(87) International publication number: WO 2022/019288

(57) **Abstract**

A double-ended ship is provided with: a hull including a body portion, a bow portion disposed forward of the body portion, and a stem portion disposed aft of the body portion; a bow-side wedge disposed on the bow portion and having a lower surface; a stern-side wedge disposed on the stern portion and having a lower surface; a bow-side actuator for adjusting a position of the lower surface of the bow-side wedge; and a stem-side actuator for adjusting a position of the lower surface of the stem-side wedge.

## Description

### TECHNICAL FIELD

The present disclosure relates to a double-ended ship.

The present application claims priority based on Japanese Patent Application No. 2020-125119 filed on July 22, 2020, the entire content of which is incorporated herein by reference.

### BACKGROUND ART

Patent Document 1 discloses a double-ended ship in which two propulsion devices that generate thrust are arranged on both sides (bow and stem) with respect to the traveling direction of the hull, enabling the ship to travel in either direction by driving the propulsion device on the rear side with respect to the traveling direction of the hull. It is desirable that such a double-ended ship be constructed to ensure the performance in traveling both forward and aft; for example, the shape of the hull is symmetrical fore and aft.

### Citation List

### Patent Literature

Patent Document 1: JPH3-124995U

### SUMMARY

### Problems to be Solved

A ship such as passenger ships and RORO ships may be provided with a wedge at the aft end of the hull to reduce hull resistance. When applying this wedge to a double-ended ship, wedges are provided at both the bow and the stern. In this case, when the double-ended ship is traveling, one wedge can reduce the hull resistance, but the other wedge rather acts as a resistance to the traveling, which may hinder the improvement of the traveling performance of the double-ended ship. However, Patent Document 1 does not disclose any findings for suppressing the resistance of the other wedge when wedges are applied to the double-ended ship.

The present disclosure was made in view of the above problem, and an object thereof is to provide a double-ended ship capable of improving the traveling performance even when wedges are provided at both the bow and the stern.

### Solution to the Problems

To achieve the above object, a double-ended ship according to the present disclosure is provided with: a hull including a body portion, a bow portion disposed forward of the body portion, and a stem portion disposed aft of the body portion; a bow-side wedge disposed on the bow portion and having a lower surface; a stem-side wedge disposed on the stem portion and having a lower surface; a bow-side actuator for adjusting a position of the lower surface of the bow-side wedge; and a stern-side actuator for adjusting a position of the lower surface of the stem-side wedge.

### Advantageous Effects

With the double-ended ship of the present disclosure, the bow-side actuator can adjust the position of the lower surface of the bow-side wedge, and the stern-side actuator can adjust the position of the lower surface of the stem-side wedge. Thus, even when wedges are provided at both the bow and stem, the resistance of the bow-side wedge can be suppressed when the double-ended ship travels forward, and the resistance of the stern-side wedge can be suppressed when the double-ended ship travels aft, thereby improving the traveling performance of the double-ended ship.

### BRIEF DESCRIPTION OF DRAWINGS

FIG. 1 is a schematic configuration diagram of a double-ended ship according to the first embodiment of the present disclosure.
FIG. 2A is a perspective view of a bow-side wedge according to the first embodiment of the present disclosure.
FIG. 2B is a perspective view of a stem-side wedge according to the first embodiment of the present disclosure.
FIG. 3A is a side view showing a configuration in the vicinity of a lower surface of a bow portion according to the first embodiment of the present disclosure.
FIG. 3B is a side view showing a configuration in the vicinity of a lower surface of a stern portion according to the first embodiment of the present disclosure.
FIG. 4A is a diagram showing an example of a bow-side actuator according to the first embodiment of the present disclosure.
FIG. 4B is a diagram showing an example of a stern-side actuator according to the first embodiment of the present disclosure.
FIG. 5A is a side view showing a configuration in the vicinity of a lower surface of a bow portion according to the second embodiment of the present disclosure.
FIG. 5B is a side view showing a configuration in the vicinity of a lower surface of a stern portion according to the second embodiment of the present disclosure.
FIG. 6 is a functional block diagram of a double-ended ship according to the third embodiment of the present disclosure.
FIG. 7 is a functional block diagram of a double-ended ship according to the fourth embodiment of the present disclosure.
FIG. 8A is a schematic diagram showing a configuration of a bow-side wedge according to some embodiments of the present disclosure when a bow portion is viewed from below.
FIG. 8B is a schematic diagram showing a configuration of a stem-side wedge according to some embodiments of the present disclosure when a stern portion is viewed from below.

### DETAILED DESCRIPTION

Hereinafter, a double-ended ship according to embodiments of the present disclosure will be described with reference to the drawings. The following embodiments are illustrative and not intended to limit the present disclosure, and various modifications are possible within the scope of technical ideas of the present disclosure.

### <First Embodiment>

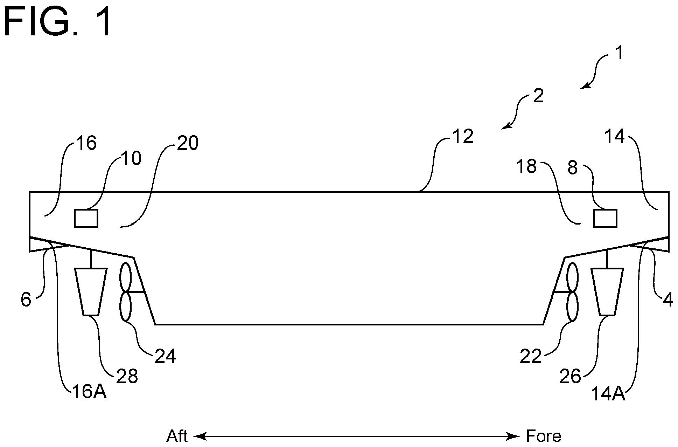

The configuration of a double-ended ship according to the first embodiment of the present disclosure will be described with reference to FIG. 1. As shown in FIG. 1, a double-ended ship 1 includes a hull 2, a bow-side wedge 4, a stem-side wedge 6, a bow-side actuator 8, and a stern-side actuator 10.

The hull 2 includes a body portion 12, a bow portion 14, and a stern portion 16. In the present disclosure, the right direction in FIG. 1 is defined as forward, and the left direction as aft. The bow portion 14 is disposed forward of the body portion 12. The stern portion 16 is disposed aft of the body portion 12. Further, a direction perpendicular to the fore-aft direction (traveling direction of the double-ended ship 1) in the horizontal plane is defined as a ship width direction.

The body portion 12 includes a forward protruding portion 18 that protrudes forward. The bow portion 14 protrudes further forward from the fore end of the forward protruding portion 18. Similarly, the body portion 12 includes an aft protruding portion 20 that protrudes aft. Further, the stern portion 16 protrudes further aft from the aft end of the aft protruding portion 20. Below the forward protruding portion 18, a space is formed in which a bow-side screw propeller 22 and a bow-side rudder 26, which will be described later, are placed. Similarly, below the aft protruding portion 20, a space is formed in which a stem-side screw propeller 24 and a stern-side rudder 28, which will be described later, are placed.

The double-ended ship 1 includes a fore thruster for generating thrust causing the double-ended ship 1 to travel aft, and an aft thruster for generating thrust causing the double-ended ship 1 to travel forward. In the first embodiment, the double-ended ship 1 includes a bow-side screw propeller 22 as an example of the fore thruster and a stern-side screw propeller 24 as an example of the aft thruster. Each of the bow-side screw propeller 22 and the stern-side screw propeller 24 is a member configured to be rotationally driven in water to propel the double-ended ship 1. The bow-side screw propeller 22 is provided on a front surface of the body portion 12 facing forward and is disposed below the forward protruding portion 18. The stem-side screw propeller 24 is provided on a rear surface of the body portion 12 facing aft and is disposed below the aft protruding portion 20. The thruster may be other than a screw propeller, such as an azimuth thruster or a pod-type thruster.

Further, the double-ended ship 1 may include a bow-side rudder 26 and a stem-side rudder 28. The bow-side rudder 26 and the stern-side rudder 28 are plate-shaped members having control surfaces, and can change the traveling direction of the double-ended ship 1 by changing the attitude (angle). In the first embodiment, the bow-side rudder 26 is disposed on a lower surface of the forward protruding portion 18 facing downward, and the stern-side rudder 28 is disposed on a lower surface of the aft protruding portion 20 facing downward.

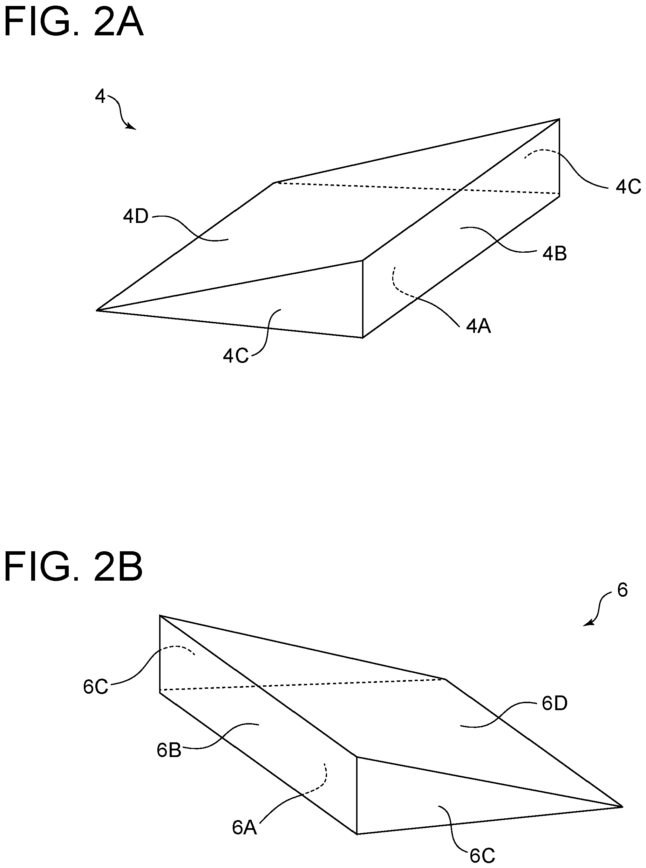

The bow-side wedge 4 is disposed on a lower surface 14A of the bow portion 14 facing downward. As shown in FIG. 2A, the bow-side wedge 4 has a lower surface 4A facing downward, a front surface 4B facing forward, side surfaces 4C facing in the ship width direction, and an upper surface 4D facing upward. The outer shapes of the side surfaces 4C of the bow-side wedge 4 are substantially triangular, and the outer shapes of the lower surface 4A, the front surface 4B, and the upper surface 4D of the bow-side wedge 4 are substantially rectangular.

The stem-side wedge 6 is disposed on a lower surface 16A of the stem portion 16 facing downward. As shown in FIG. 2B, the stern-side wedge 6 has a lower surface 6A facing downward, a front surface 6B facing forward, side surfaces 6C facing in the ship width direction, and an upper surface 6D facing upward. The outer shapes of the side surfaces 6C of the stem-side wedge 6 are substantially triangular, and the outer shapes of the lower surface 6A, the front surface 6B, and the upper surface 6D of the stern-side wedge 6 are substantially rectangular.

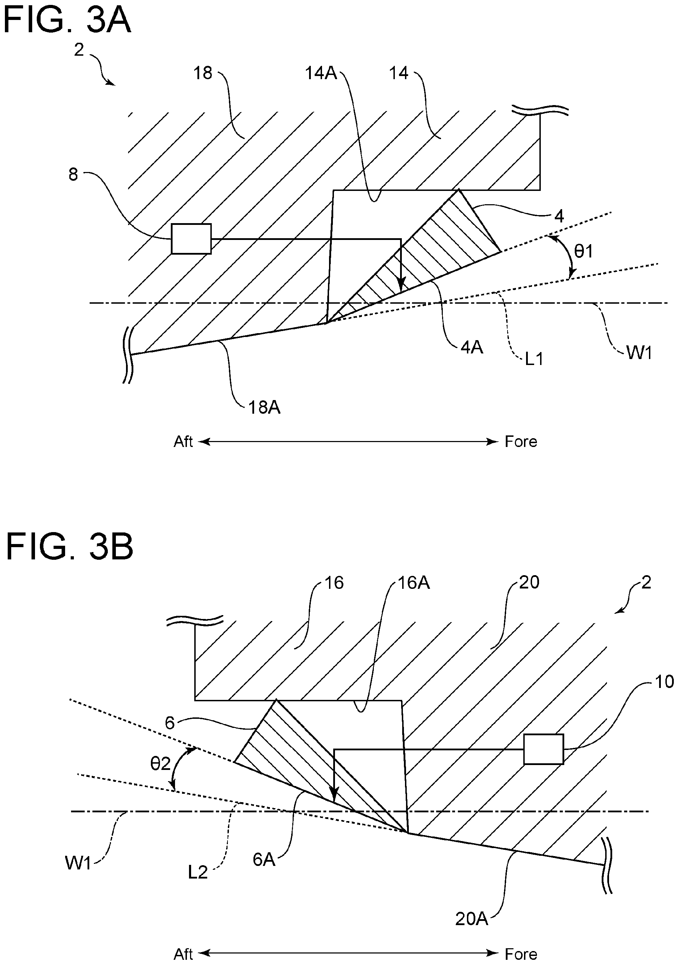

The bow-side actuator 8 is configured to adjust the position of the lower surface 4A of the bow-side wedge 4. In the first embodiment, the bow-side actuator 8 rotates the bow-side wedge 4 with respect to the hull 2 to adjust the angle θ1 of the lower surface 4A of the bow-side wedge 4 with respect to the bottom surface of the hull 2. The angle θ1 is an angle formed by a bow-side ship bottom line L1 and the lower surface 4A of the bow-side wedge 4, as shown in FIG. 3A. Here, the bow-side ship bottom line L1 is an imaginary extension formed by extending a lower surface 18A of the forward protruding portion 18 (the bottom surface of the body portion 12) forward.

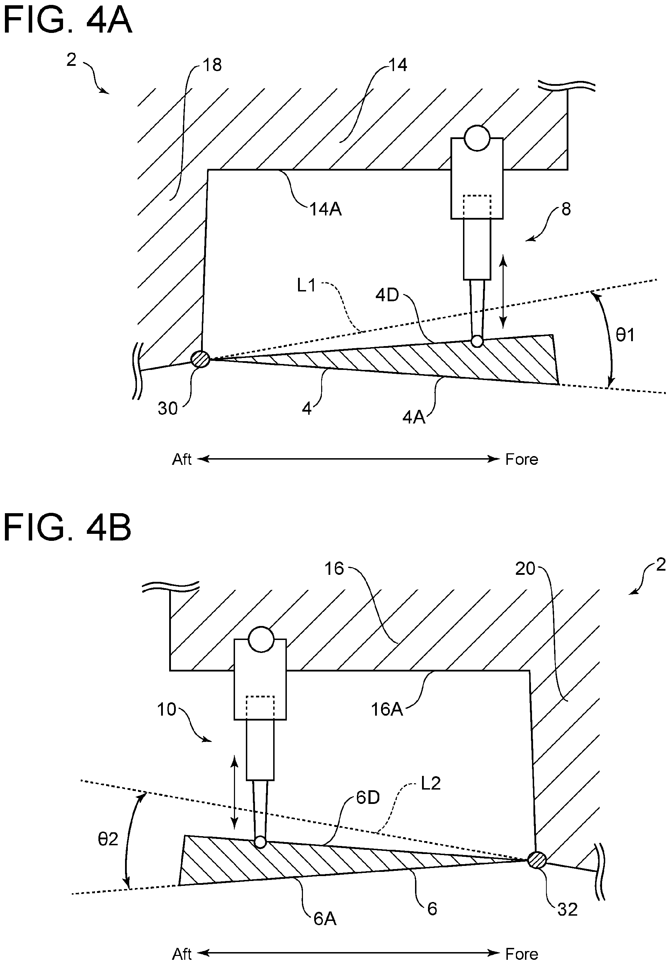

FIG. 4A shows an example of the bow-side actuator 8. The bow-side wedge 4 is rotatably supported at the aft end of the bow-side wedge 4 on the hull 2 (the forward protruding portion 18) via a hinge mechanism 30. The bow-side actuator 8 is a hydraulic cylinder, which is disposed on the lower surface 14A of the bow portion 14 so as to be located forward of the hinge mechanism 30, and is connected to the upper surface 4D of the bow-side wedge 4. By operating the hydraulic cylinder to move the bow-side wedge 4 in the vertical direction, the angle θ1 of the lower surface 4A of the bow-side wedge 4 is changed. The bow-side actuator 8 of the present disclosure is not limited to a hydraulic cylinder, but may be an electric cylinder or an electric motor, for example. The bow-side actuator 8 may be configured to allow a crew member of the double-ended ship 1 to manually adjust the angle θ1 of the lower surface 4A of the bow-side wedge 4.

The stem-side actuator 10 is configured to adjust the position of the lower surface 6A of the stem-side wedge 6. In the first embodiment, the stem-side actuator 10 rotates the stem-side wedge 6 with respect to the hull 2 to adjust the angle θ2 of the lower surface 6A of the stern-side wedge 6 with respect to the bottom surface of the hull 2. The angle θ2 is an angle formed by a stem-side ship bottom line L2 and the lower surface 6A of the stem-side wedge 6, as shown in FIG. 3B. Here, the stern-side ship bottom line L2 is an imaginary extension formed by extending a lower surface 20A of the aft protruding portion 20 (the bottom surface of the body portion 12) aft.

FIG. 4B shows an example of the stern-side actuator 10. The stern-side wedge 6 is rotatably supported at the fore end of the stern-side wedge 6 on the hull 2 (the aft protruding portion 20) via a hinge mechanism 32. The stem-side actuator 10 is a hydraulic cylinder, which is disposed on the lower surface 16A of the stem portion 16 so as to be located aft of the hinge mechanism 32, and is connected to the upper surface 6D of the stern-side wedge 6. By operating the hydraulic cylinder to move the stern-side wedge 6 in the vertical direction, the angle θ2 of the lower surface 6A of the stem-side wedge 6 is changed. The stem-side actuator 10 of the present disclosure is not limited to a hydraulic cylinder, but may be an electric cylinder or an electric motor, for example. The stern-side actuator 10 may be configured to allow a crew member of the double-ended ship 1 to manually adjust the angle θ2 of the lower surface 6A of the stern-side wedge 6.

The bow-side wedge 4 and the stern-side wedge 6 are installed so that at least part of them can be submerged below the water surface, thus functioning as water flow deflectors for changing the direction of the water flow. The bow-side wedge 4 can reduce the hull resistance of the double-ended ship 1 as a water flow deflector when the double-ended ship 1 travels aft, but when the double-ended ship 1 travels forward, it does not function as a water flow deflector and may act as a resistance to the traveling of the double-ended ship 1. Similarly, the stern-side wedge 6 can reduce the hull resistance of the double-ended ship 1 as a water flow deflector when the double-ended ship 1 travels forward, but when the double-ended ship 1 travels aft, it does not function as a water flow deflector and may act as a resistance to the traveling of the double-ended ship 1.

According to the first embodiment, since the bow-side actuator 8 can adjust the angle θ1 of the lower surface 4A of the bow-side wedge 4, when the double-ended ship 1 travels forward, the fore end of the bow-side wedge 4 can be placed above the water surface W1 in calm water (no or very low waves). Similarly, since the stern-side actuator 10 can adjust the angle θ2 of the lower surface 6A of the stem-side wedge 6, when the double-ended ship 1 travels aft, the aft end of the stern-side wedge 6 can be placed above the water surface W1 in calm water. Thus, the resistance of the bow-side wedge 4 can be suppressed when the double-ended ship 1 travels forward, and the resistance of the stem-side wedge 6 can be suppressed when the double-ended ship 1 travels aft, thereby improving the traveling performance of the double-ended ship 1. In FIGs. 3A and 3B, the water surface W1 in calm water is indicated by the dotted and dashed line.

Additionally, according to the first embodiment, when the double-ended ship 1 travels forward, by adjusting the lower surface 4A of the bow-side wedge 4 to a position above the bow-side ship bottom line L1, the range in which the bow-side wedge 4 is submerged in water when traveling in waves can be reduced, and water hitting the bow-side wedge 4 can be smoothly guided to the lower surface 14A of the bow portion 14. Similarly, when the double-ended ship 1 travels aft, by adjusting the lower surface 6A of the stem-side wedge 6 to a position above the stem-side ship bottom line L2, the range in which the stern-side wedge 6 is submerged in water when traveling in waves can be reduced, and water hitting the stern-side wedge 6 can be smoothly guided to the lower surface 16A of the stem portion 16. Thus, the resistance of the bow-side wedge 4 can be suppressed when the double-ended ship 1 travels forward in waves, and the resistance of the stem-side wedge 6 can be suppressed when the double-ended ship 1 travels aft in waves, thereby improving the traveling performance of the double-ended ship 1.

The first embodiment has described the case where the bow-side actuator 8 adjusts the angle θ1 of the lower surface 4A of the bow-side wedge 4, but the bow-side actuator 8 may be configured to adjust the height position of the lower surface 4A of the bow-side wedge 4 by vertically moving the bow-side wedge 4. Similarly, the stem-side actuator 10 may be configured to adjust the height position of the lower surface 6A of the stern-side wedge 6 by vertically moving the stem-side wedge 6.

### <Second Embodiment>

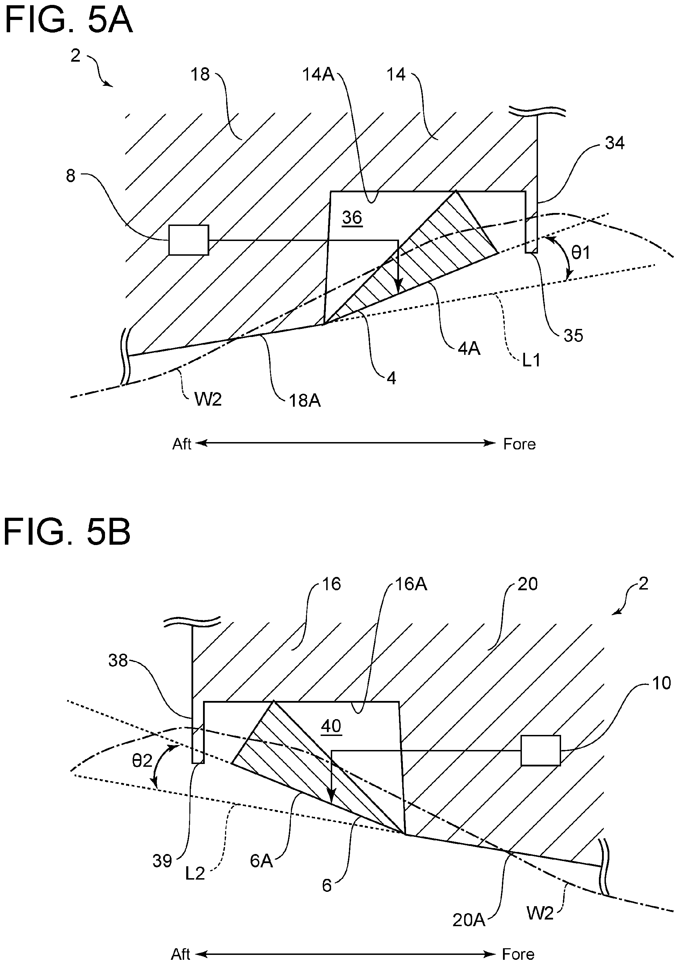

The double-ended ship 1 according to the second embodiment of the present disclosure will be described with reference to FIGs. 5A and 5B. The second embodiment is different from the first embodiment in that a bow-side extension portion 34 and a stern-side extension portion 38 are further provided, but the other configurations are the same as those described in the first embodiment. In the second embodiment, the same constituent elements as those in the first embodiment are associated with the same reference characters and thus not described again in detail.

As shown in FIG. 5A, the double-ended ship 1 further includes a bow-side extension portion 34 that extends downward from the fore end of the bow portion 14 (hull 2). The bow-side extension portion 34 is a plate-shaped member, and the front surface thereof is configured as a part of the bow end portion when the double-ended ship 1 travels forward. A lower end 35 of the bow-side extension portion 34 is located above the bow-side ship bottom line L1. A bow-side space 36 is formed by being surrounded by the forward protruding portion 18 (part of the hull 2), the bow portion 14 (part of the hull 2), and the bow-side extension portion 34. The bow-side space 36 is defined so that at least part of the bow-side wedge 4 can be contained (placed). The bow-side actuator 8 may be configured to adjust the lower surface 4A of the bow-side wedge 4 to be placed in the bow-side space 36. For example, when the bow-side actuator 8 is a hydraulic cylinder, the bow-side wedge 4 may be moved to the bow-side space 36 by performing an operation to supply hydraulic oil to the hydraulic cylinder. In FIG. 5A, the water surface W2 in waves is indicated by the dotted and dashed line.

As shown in FIG. 5B, the double-ended ship 1 further includes a stern-side extension portion 38 that extends downward from the aft end of the stem portion 16 (hull 2). The stem-side extension portion 38 is a plate-shaped member, and the rear surface thereof is configured as a part of the stem end portion when the double-ended ship 1 travels aft. A lower end 39 of the stern-side extension portion 38 is located above the stern-side ship bottom line L2. A stem-side space 40 is formed by being surrounded by the aft protruding portion 20 (part of the hull 2), the stem portion 16 (part of the hull 2), and the stern-side extension portion 38. The stem-side space 40 is defined so that at least part of the stem-side wedge 6 can be contained (placed). The stern-side actuator 10 may be configured to adjust the lower surface 6A of the stem-side wedge 6 to be placed in the stem-side space 40. For example, when the stem-side actuator 10 is a hydraulic cylinder, the stem-side wedge 6 may be moved to the stern-side space 40 by performing an operation to supply hydraulic oil to the hydraulic cylinder. In FIG. 5B, the water surface W2 in waves is indicated by the dotted and dashed line.

According to the second embodiment, when the double-ended ship 1 travels forward in waves, the bow-side extension portion 34 receives waves on the fore side of the bow-side wedge 4, preventing water from directly entering the bow-side space 36 between the bow-side wedge 4 and the bow portion 14. Thus, the flow of water below the bow portion 14 can be made smooth, and the traveling performance of the double-ended ship 1 can be improved. In addition, it is possible to reduce the possibility that an object floating on the water surface W2 in waves enters the bow-side space 36 and interferes with the operation of the bow-side wedge 4.

Similarly, according to the second embodiment, when the double-ended ship 1 travels aft in waves, the stern-side extension portion 38 receives waves on the aft side of the stem-side wedge 6, preventing water from directly entering the stern-side space 40 between the stem-side wedge 6 and the stem portion 16. Thus, the flow of water below the stern portion 16 can be made smooth, and the traveling performance of the double-ended ship 1 can be improved. In addition, it is possible to reduce the possibility that an object floating on the water surface W2 in waves enters the stern-side space 40 and interferes with the operation of the stern-side wedge 6.

In the second embodiment, the double-ended ship 1 includes both the bow-side extension portion 34 and the stem-side extension portion 38, but the present disclosure is not limited to this embodiment. The double-ended ship 1 may include either one of the bow-side extension portion 34 or the stem-side extension portion 38.

### <Third Embodiment>

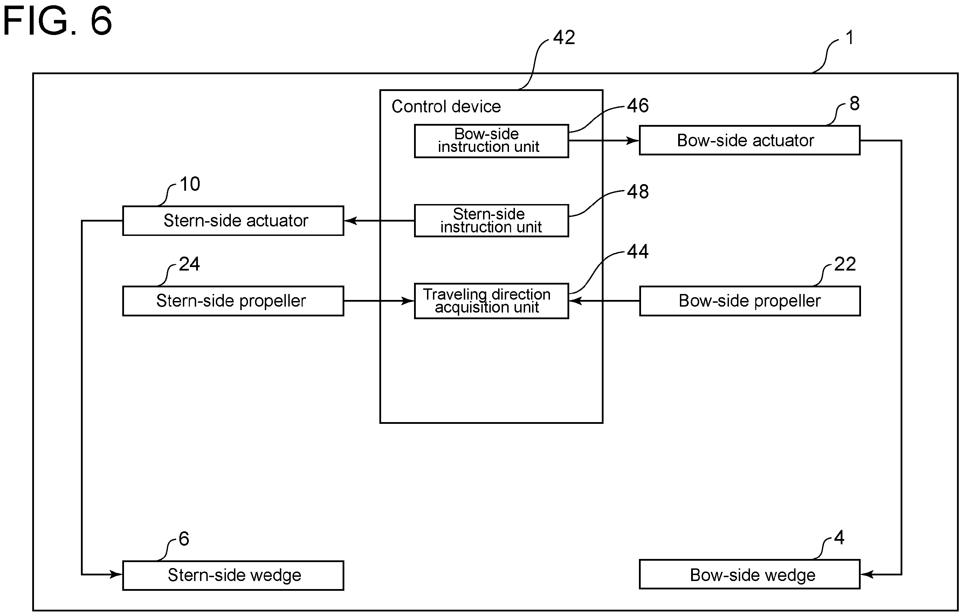

The double-ended ship 1 according to the third embodiment of the present disclosure will be described with reference to FIG. 6. The third embodiment is different from the second embodiment in that a control device 42 is further provided, but the other configurations are the same as those described in the first embodiment or the second embodiment. In the third embodiment, the same constituent elements as those in the first embodiment and the second embodiment are associated with the same reference characters and thus not described again in detail.

As shown in FIG. 6, the double-ended ship 1 includes a control device 42. The control device 42 is electrically connected to the bow-side actuator 8 and the stem-side actuator 10. The control device 42 includes a CPU (processor), a memory (storage device) such as ROM or RAM, and an I/O interface (not shown). The control device 42 may be electrically connected to a touch panel (not shown). By touching buttons displayed on the touch panel, a crew member of the double-ended ship 1 can operate the bow-side actuator 8 and the stern-side actuator 10 to manually adjust the angle θ1 and the angle θ2. Alternatively, the control device 42 may be set so that the angle θ1 and the angle θ2 reach predetermined angles by touching a button.

The control device 42 may further include a traveling direction acquisition unit 44 for acquiring the traveling direction of the double-ended ship 1. The traveling direction acquisition unit 44 acquires the traveling direction of the double-ended ship 1, based on the respective driving states of the bow-side screw propeller 22 and the stem-side screw propeller 24. The traveling direction acquisition unit 44 may identify the traveling direction of the double-ended ship 1 by other means such as position information or speed information acquired by GPS or a speedometer, or a combination thereof.

In the embodiment illustrated in FIG. 6, the control device 42 includes a bow-side instruction unit 46 and a stem-side instruction unit 48. The bow-side instruction unit 46 instructs the bow-side actuator 8 on the angle θ1 of the lower surface 4A of the bow-side wedge 4, based on the traveling direction of the double-ended ship 1 acquired by the traveling direction acquisition unit 44. Then, the bow-side actuator 8 adjusts the bow-side wedge 4 so that the angle θ1 reaches the angle instructed by the bow-side instruction unit 46. The stem-side instruction unit 48 instructs the stem-side actuator 10 on the angle θ2 of the lower surface 6A of the stern-side wedge 6, based on the traveling direction of the double-ended ship 1 acquired by the traveling direction acquisition unit 44. Then, the stern-side actuator 10 adjusts the stem-side wedge 6 so that the angle θ2 reaches the angle instructed by the stem-side instruction unit 48.

According to the third embodiment, when the double-ended ship 1 travels forward, by automatically adjusting the angle θ1 of the lower surface 4A of the bow-side wedge 4 with the bow-side actuator 8 so that the lower surface 4A of the bow-side wedge 4 is located above the bow-side ship bottom line L1, the bow-side wedge 4 can be placed above the water surface W1 in calm water. Similarly, when the double-ended ship 1 travels aft, by automatically adjusting the angle θ2 of the lower surface 6A of the stem-side wedge 6 with the stem-side actuator 10 so that the lower surface 6A of the stem-side wedge 6 is located above the stern-side ship bottom line L2, the stern-side wedge 6 can be placed above the water surface W1 in calm water.

The bow-side instruction unit 46 may instruct, when the double-ended ship 1 travels aft, the bow-side actuator 8 on the angle θ1 of the lower surface 4A of the bow-side wedge 4 so that the lower surface 4A of the bow-side wedge 4 is located below the bow-side ship bottom line L1 (so that the bow-side wedge 4 functions as a water flow deflector). Similarly, the stem-side instruction unit 48 may instruct, when the double-ended ship 1 travels forward, the stem-side actuator 10 on the angle θ2 of the lower surface 6A of the stern-side wedge 6 so that the lower surface 6A of the stem-side wedge 6 is located below the stern-side ship bottom line L2 (so that the stern-side wedge 6 functions as a water flow deflector).

### <Fourth Embodiment>

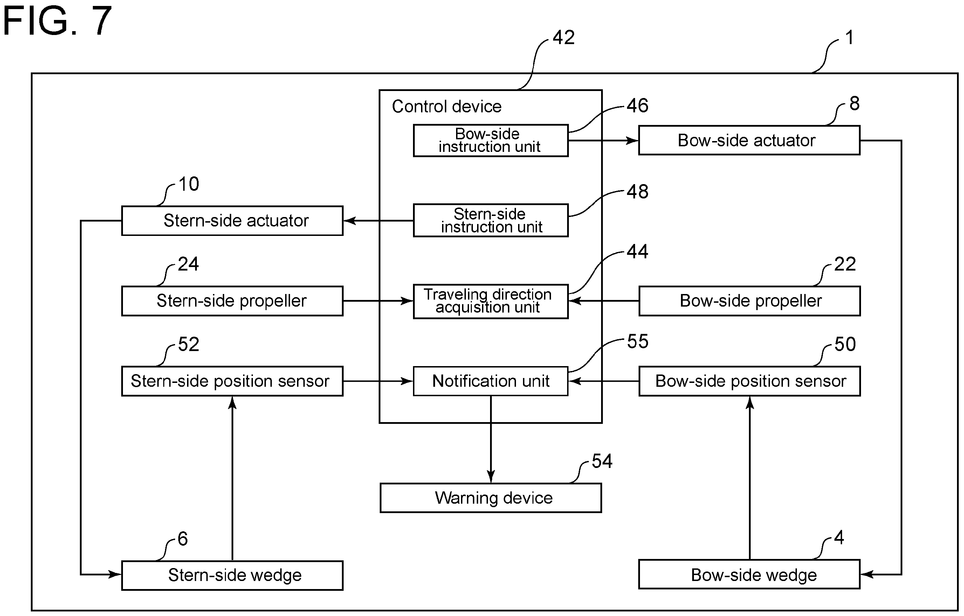

The double-ended ship 1 according to the fourth embodiment of the present disclosure will be described with reference to FIG. 7. The fourth embodiment is different from the third embodiment in that a bow-side position sensor 50, a stem-side position sensor 52, and a warning device 54 are further provided, but the other configurations are the same as those described in the third embodiment. In the fourth embodiment, the same constituent elements as those in the third embodiment are associated with the same reference characters and thus not described again in detail. The bow-side position sensor 50, the stem-side position sensor 52, and the warning device 54 may be provided in the double-ended ship 1 described in the first embodiment or the second embodiment.

As shown in FIG. 7, the double-ended ship 1 further includes a bow-side position sensor 50 for detecting the position of the bow-side wedge 4, a stern-side position sensor 52 for detecting the position of the stern-side wedge 6, and a warning device 54 configured to notify a warning. In the fourth embodiment, the control device 42 includes a notification unit 55 for instructing the warning device 54 to issue a warning, based on the position of the bow-side wedge 4 detected by the bow-side position sensor 50 and the position of the stern-side wedge 6 detected by the stem-side position sensor 52.

The bow-side position sensor 50 is, for example, a camera configured to capture an image of the bow-side wedge 4 and transmit the image captured by the camera to the notification unit 55. The stem-side position sensor 52 is, for example, a camera configured to capture an image of the stern-side wedge 6 and transmit the image captured by the camera to the notification unit 55. However, in the present disclosure, the bow-side position sensor 50 and the stem-side position sensor 52 are not limited to cameras. For example, when the bow-side actuator 8 is a hydraulic cylinder, the position of the bow-side wedge 4 may be calculated from the amount of hydraulic oil supplied to the hydraulic cylinder.

The notification unit 55 instructs the warning device 54 to issue a warning if the position of the bow-side wedge 4 imaged by the camera (bow-side position sensor 50) is below a predetermined position when the traveling direction of the double-ended ship 1 acquired by the traveling direction acquisition unit 44 is forward. The predetermined position may be, for example, the above-described bow-side ship bottom line L1.

Further, the notification unit 55 instructs the warning device 54 to issue a warning if the position of the stern-side wedge 6 imaged by the camera (stem-side position sensor 52) is below a predetermined position when the traveling direction of the double-ended ship 1 acquired by the traveling direction acquisition unit 44 is aft. The predetermined position may be, for example, the above-described stern-side ship bottom line L2.

When the double-ended ship 1 travels forward, if the position of the bow-side wedge 4 is below the bow-side ship bottom line L1, the period in which the bow-side wedge 4 is below the water surface W2 in the waves increases, and the resistance of the bow-side wedge 4 may increase (the fuel consumption may deteriorate). Similarly, when the double-ended ship 1 travels aft, if the position of the stem-side wedge 6 is below the stern-side ship bottom line L2, the period in which the stern-side wedge 6 is below the water surface W2 in the waves increases, and the resistance of the stern-side wedge 6 may increase (the fuel consumption may deteriorate).

However, according to the fourth embodiment, the warning is notified by the warning device 54 both if the position of the bow-side wedge 4 is below the bow-side ship bottom line L1 when the double-ended ship 1 travels forward and if the position of the stem-side wedge 6 is below the stern-side ship bottom line L2 when the double-ended ship 1 travels aft. This allows a crew member of the double-ended ship 1 to quickly identify that the bow-side wedge 4 and the stern-side wedge 6 are in inappropriate positions where the resistance to the traveling of the double-ended ship 1 is significant, and touch the buttons displayed on the touch panel to move the bow-side wedge 4 and the stem-side wedge 6 to appropriate positions where the resistance to the traveling of the double-ended ship 1 is small or zero.

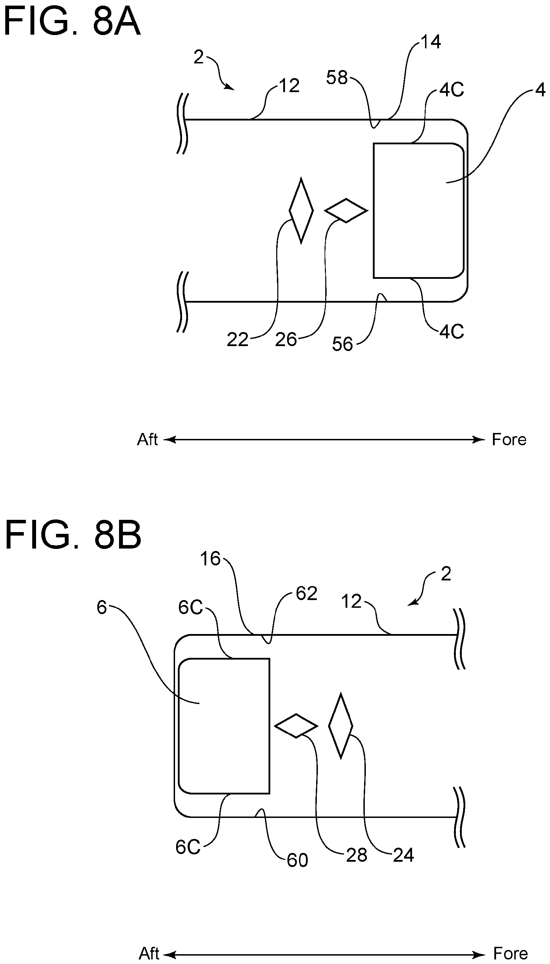

In some embodiments, as shown in FIG. 8A, the bow-side wedge 4 may extend from one end portion 56 at one widthwise end side of the bow portion 14 to the other end portion 58 at the other widthwise end side of the bow portion 14 so that the side surfaces 4C of the bow-side wedge 4 function as the side surfaces of the hull 2. Similarly, as shown in FIG. 8B, the stem-side wedge 6 may extend from one end portion 60 at one widthwise end side of the stem portion 16 to the other end portion 62 at the other widthwise end side of the stern portion 16 so that the side surfaces 6C of the stem-side wedge 6 functions as the side surfaces of the hull 2.

The contents described in the above embodiments would be understood as follows, for instance.
(1) A double-ended ship (1) according to the present disclosure includes: a hull (2) including a body portion (12), a bow portion (14) disposed forward of the body portion, and a stem portion (16) disposed aft of the body portion; a bow-side wedge (4) disposed on the bow portion and having a lower surface (4A); a stern-side wedge (6) disposed on the stern portion and having a lower surface (6A); a bow-side actuator (8) for adjusting a position of the lower surface of the bow-side wedge; and a stern-side actuator (10) for adjusting a position of the lower surface of the stern-side wedge.
   With the above configuration (1), since the bow-side actuator can adjust the position of the lower surface of the bow-side wedge, when the double-ended ship travels forward, the bow-side wedge can be placed above the water surface. Similarly, since the stern-side actuator can adjust the position of the lower surface of the stern-side wedge, when the double-ended ship travels aft, the stern-side wedge can be placed above the water surface. Thus, the resistance of the bow-side wedge can be suppressed when the double-ended ship travels forward, and the resistance of the stern-side wedge can be suppressed when the double-ended ship travels aft, thereby improving the traveling performance of the double-ended ship.
(2) In some embodiments, in the above configuration (1), when an extension formed by extending a bottom surface (18A) of the body portion forward is defined as a bow-side ship bottom line L1, the bow-side actuator is configured to adjust the lower surface of the bow-side wedge to a position above the bow-side ship bottom line L1, and when an extension formed by extending a bottom surface (20A) of the body portion aft is defined as a stern-side ship bottom line L2, the stem-side actuator is configured to adjust the lower surface of the stem-side wedge to a position above the stem-side ship bottom line L2.
   With the above configuration (2), when the double-ended ship travels forward, by adjusting the lower surface of the bow-side wedge to a position above the bow-side ship bottom line L1, the range in which the bow-side wedge is submerged in water when traveling in waves can be reduced, and water hitting the bow-side wedge can be smoothly guided to the lower surface of the bow portion. Similarly, when the double-ended ship travels aft, by adjusting the lower surface of the stem-side wedge to a position above the stem-side ship bottom line, the range in which the stern-side wedge is submerged in water when traveling in waves can be reduced, and water hitting the stern-side wedge can be smoothly guided to the lower surface of the stem portion. Thus, the resistance of the bow-side wedge can be suppressed reliably when the double-ended ship travels forward, and the resistance of the stem-side wedge can be suppressed reliably when the double-ended ship travels aft, thereby improving the traveling performance of the double-ended ship.
(3) In some embodiments, in the above configuration (2), the double-ended ship further includes a bow-side extension portion (34) extending downward from a fore end of the hull. A lower end (35) of the bow-side extension portion is disposed above the bow-side ship bottom line L1. A bow-side space (36) in which the bow-side wedge can be placed is formed by the hull and the bow-side extension portion. The bow-side actuator is configured to adjust at least part of the bow-side wedge to be placed in the bow-side space.
   With the above configuration (3), when the double-ended ship travels forward in waves, the bow-side extension portion receives waves on the fore side of the bow-side wedge, preventing water from directly entering the bow-side space. Thus, the flow of water under the bow portion can be made smooth, and the traveling performance of the double-ended ship can be improved. In addition, it is possible to reduce the possibility that an object floating on the water surface enters the bow-side space and interferes with the operation of the bow-side wedge.
(4) In some embodiments, in the above configuration (2) or (3), the double-ended ship further includes a stern-side extension portion (38) extending downward from an aft end of the hull. A lower end (39) of the stern-side extension portion is disposed above the stem-side ship bottom line L2. A stern-side space (40) in which the stem-side wedge can be placed is formed by the hull and the stem-side extension portion. The stern-side actuator is configured to adjust at least part of the stern-side wedge to be placed in the stem-side space.
   With the above configuration (4), when the double-ended ship travels aft in waves, the stem-side extension portion receives waves on the aft side of the stem-side wedge, preventing water from directly entering the stern-side space. Thus, the flow of water under the stem portion can be made smooth, and the traveling performance of the double-ended ship can be improved. In addition, it is possible to reduce the possibility that an object floating on the water surface enters the stern-side space and interferes with the operation of the stem-side wedge.
(5) In some embodiments, in any one of the above configurations (1) to (4), the double-ended ship further includes a control device (42) including: a bow-side instruction unit (46) configured to instruct the bow-side actuator on the position of the lower surface of the bow-side wedge, based on a traveling direction of the double-ended ship; and a stern-side instruction unit (48) configured to instruct the stern-side actuator on the position of the lower surface of the stern-side wedge, based on a traveling direction of the double-ended ship.
   With the above configuration (5), when the double-ended ship travels forward, the bow-side actuator can automatically adjust the position of the lower surface of the bow-side wedge to place the bow-side wedge above the water surface. Similarly, when the double-ended ship travels aft, the stem-side actuator can automatically adjust the position of the lower surface of the stern-side wedge to place the stem-side wedge above the water surface.
(6) In some embodiments, in any one of the above configurations (1) to (5), the double-ended ship further includes: a bow-side position sensor (50) for detecting a position of the bow-side wedge; a stem-side position sensor (52) for detecting a position of the stem-side wedge; and a warning device (54) configured to notify a warning if the position of the bow-side wedge detected by the bow-side position sensor is below a predetermined position when the double-ended ship travels forward, and notify a warning if the position of the stern-side wedge detected by the stem-side position sensor is below a predetermined position when the double-ended ship travels aft.
   When the double-ended ship travels forward, if the position of the bow-side wedge is below a predetermined position, the period in which the bow-side wedge is below the water surface increases, and the resistance of the bow-side wedge may increase. Similarly, when the double-ended ship travels aft, if the position of the stem-side wedge is below a predetermined position, the period in which the stern-side wedge is below the water surface increases, and the resistance of the stern-side wedge may increase. However, with the above configuration (6), the warning is notified both if the position of the bow-side wedge is below the predetermined position when the double-ended ship travels forward and if the position of the stern-side wedge is below the predetermined position when the double-ended ship travels aft. This allows a crew member of the double-ended ship to quickly identify that the bow-side wedge and the stem-side wedge are in inappropriate positions where the resistance to the traveling of the double-ended ship is significant, and move the bow-side wedge and the stem-side wedge to appropriate positions where the resistance to the traveling of the double-ended ship is small or zero.
(7) In some embodiments, in any one of the above configurations (1) to (6), the double-ended ship includes: a fore thruster (22) disposed on the hull and configured to generate thrust causing the double-ended ship to travel aft; and an aft thruster (24) disposed aft of the fore thruster on the hull and configured to generate thrust causing the double-ended ship to travel forward.

With the above configuration (7), the present disclosure can be applied to the double-ended ship including the fore thruster and the aft thruster.

### Reference Signs List

- 1: Double-ended ship
- 2: Hull
- 4: Bow-side wedge
- 4A: Lower surface of bow-side wedge
- 6: Stern-side wedge
- 6A: Lower surface of stern-side wedge
- 8: Bow-side actuator
- 10: Stern-side actuator
- 12: Body portion
- 14: Bow portion
- 16: Stern portion
- 18: Forward protruding portion
- 18A: Lower surface of forward protruding portion (Bottom surface of body portion)
- 20: Aft protruding portion
- 20A: Lower surface of aft protruding portion (Bottom surface of body portion)
- 22: Bow-side screw propeller
- 24: Stern-side screw propeller
- 26: Bow-side rudder
- 28: Stern-side rudder
- 30: Hinge structure
- 32: Hinge mechanism
- 34: Bow-side extension portion
- 35: Lower end of bow-side extension portion
- 36: Bow-side space
- 38: Stern-side extension portion
- 39: Lower end of stern-side extension portion
- 40: Stern-side space
- 42: Control device
- 44: Traveling direction acquisition unit
- 46: Bow-side instruction unit
- 48: Stern-side instruction unit
- 50: Bow-side position sensor
- 52: Stern-side position sensor
- 54: Warning device
- 55: Notification unit
- L1: Bow-side ship bottom line
- L2: Stern-side ship bottom line

## Claims

1. A double-ended ship, comprising:
a hull including a body portion, a bow portion disposed forward of the body portion, and a stern portion disposed aft of the body portion;
a bow-side wedge disposed on the bow portion and having a lower surface;
a stem-side wedge disposed on the stern portion and having a lower surface;
a bow-side actuator for adjusting a position of the lower surface of the bow-side wedge; and
a stem-side actuator for adjusting a position of the lower surface of the stem-side wedge.

2. The double-ended ship according to claim 1,
wherein when an extension formed by extending a bottom surface of the body portion forward is defined as a bow-side ship bottom line L1,
the bow-side actuator is configured to adjust the lower surface of the bow-side wedge to a position above the bow-side ship bottom line L1, and
wherein when an extension formed by extending a bottom surface of the body portion aft is defined as a stem-side ship bottom line L2,
the stern-side actuator is configured to adjust the lower surface of the stern-side wedge to a position above the stern-side ship bottom line L2.

3. The double-ended ship according to claim 2, further comprising a bow-side extension portion extending downward from a fore end of the hull,
wherein a lower end of the bow-side extension portion is disposed above the bow-side ship bottom line L1,
wherein a bow-side space in which the bow-side wedge can be placed is formed by the hull and the bow-side extension portion, and
wherein the bow-side actuator is configured to adjust at least part of the bow-side wedge to be placed in the bow-side space.

4. The double-ended ship according to claim 2 or 3, further comprising a stem-side extension portion extending downward from an aft end of the hull,
wherein a lower end of the stem-side extension portion is disposed above the stern-side ship bottom line L2,
wherein a stern-side space in which the stem-side wedge can be placed is formed by the hull and the stern-side extension portion, and
wherein the stern-side actuator is configured to adjust at least part of the stern-side wedge to be placed in the stem-side space.

5. The double-ended ship according to any one of claims 1 to 4, further comprising a control device including: a bow-side instruction unit configured to instruct the bow-side actuator on the position of the lower surface of the bow-side wedge, based on a traveling direction of the double-ended ship; and a stem-side instruction unit configured to instruct the stem-side actuator on the position of the lower surface of the stem-side wedge, based on a traveling direction of the double-ended ship.

6. The double-ended ship according to any one of claims 1 to 5, further comprising:
a bow-side position sensor for detecting a position of the bow-side wedge;
a stem-side position sensor for detecting a position of the stern-side wedge; and
a warning device configured to notify a warning if the position of the bow-side wedge detected by the bow-side position sensor is below a predetermined position when the double-ended ship travels forward, and notify a warning if the position of the stem-side wedge detected by the stem-side position sensor is below a predetermined position when the double-ended ship travels aft.

7. The double-ended ship according to any one of claims 1 to 6, comprising:
a fore thruster disposed on the hull and configured to generate thrust causing the double-ended ship to travel aft; and
an aft thruster disposed aft of the fore thruster on the hull and configured to generate thrust causing the double-ended ship to travel forward.
